Europäisches Patentamt

(19) European Patent Office

Office européen des brevets

(11) Publication number: **0 135 603**
**B1**

(12) **EUROPEAN PATENT SPECIFICATION**

(45) Date of publication of patent specification: **03.08.88**

(21) Application number: **83109586.4**

(22) Date of filing: **26.09.83**

(51) Int. Cl.⁴: **B 23 K 35/30** // C04B37/02

(54) **Ductile low temperature brazing alloy.**

(43) Date of publication of application:
**03.04.85 Bulletin 85/14**

(45) Publication of the grant of the patent:
**03.08.88 Bulletin 88/31**

(84) Designated Contracting States:
**AT DE FR GB NL SE**

(56) References cited:
**EP-A-0 038 584**
**DD-A- 40 989**
**DE-B-1 030 756**
**FR-A-1 086 609**
**FR-A-1 174 330**
**GB-A-1 001 291**
**GB-A-1 170 364**
**GB-A-1 270 477**
**SU-A- 220 013**

**K. Dies "Kupfer -und Kupferlegierungen in der
Technik" (1967), page 192**

(73) Proprietor: **GTE Products Corporation**
**100 West 10th Street**
**Wilmington, DE 19801 (US)**

(72) Inventor: **Mizuhara, Howard**
**1548 Tarrytown St.**
**San Mateo California 94402 (US)**

(74) Representative: **Patentanwälte Grünecker, Dr.
Kinkeldey, Dr. Stockmair, Dr. Schumann, Jakob,
Dr. Bezold, Meister, Hilgers, Dr. Meyer-Plath
Maximilianstrasse 58
D-8000 München 22 (DE)**

## Description

This invention relates to brazing alloys. More particularly, it relates to low temperature brazing alloys containing titanium.

From SU—A—220 013, a solder is known for soldering copper and its alloys. This solder contains 6 to 14% Sn, 25 to 35% Cu, 0.1 to 0.5% Ti, 0.05 to 0.15% B, balance Ag. Moreover, from FR—A—1 174 330, active solders and brazing allows are known. In particular, a brazing alloy composed of about 85 to 90% by weight of the Ag-Cu eutectic, about 5 to 10% by weight indium and about 5% by weight titanium melting at a temperature slightly above 700°C is disclosed in said document.

Furthermore, an alloy foil comprising 4.5% by weight of titanium, 68.8% of silver and 26.7% by weight of copper is known. This composite alloy, whilst having the ability to wet various ceramic materials and having a relatively low brazing temperature, is not ductile and cannot be rolled to a foil in a satisfactory manner and upon brazing contains a brittle dispersed phase.

Other titanium containing alloys containing higher amounts of titanium are known to wet ceramics. These can be made into a ductile foil formed by rapid solidification techniques, however, upon brazing will form a joint containing a brittle dispersed phase.

Reactive metal-silver alloys containing specified amounts of silver and a reactive metal and controlled amounts of copper or aluminium or mixtures thereof also have liquidus temperatures in the range of from about 750°C to about 950°C are ductile and after brazing are relatively free of hard dispersed phases. These alloys also may contain as optional ingredients controlled amounts of tin, palladium, indium and mixtures thereof.

Details of preferred embodiments

For a better understanding of the present invention, together with other and further objects, advantages and capabilities thereof, reference is made to the following disclosure and appended claims in connection with the above description of some of the aspects of the invention.

Within the context of this application the term "reactive metal" means titanium, vanadium, zirconium and mixtures thereof.

The amount of the reactive metal in a reactive-silver alloy containing copper or aluminum or mixtures thereof can not appreciably exceed 4% by weight and achieve a ductile material which upon brazing is free of dispersed phases. Table I below shows the effect upon hardness and ductility of various Ti-Ag-Cu alloys.

TABLE I

| % Titanium (by weight) | % Ag (by weight) | % Cu (by weight) | Knopp hardness 50 g | Ductility |
|---|---|---|---|---|
| 0 | 72 | 28 | 140 | ductile |
| .5 | 71.6 | 27.9 | 140 | ductile |
| 1.0 | 71.3 | 27.7 | 145 | ductile |
| 3.0 | 69.8 | 27.2 | 140 | ductile |
| 4.0 | 69.1 | 26.9 | 130 | ductile |
| 4.5 | 68.8 | 27.7 | 201 (M) | cracks |
| | | | 664 (D) | 2 phases |
| 5.0 | 68.4 | 26.6 | 190 (M) | cracks |
| | | | 530 (D) | 2 phases |

M=Matrix  D=Dispersed Phase

As can be seen from the data in Table I about 4% by weight of titanium is the upper weight limit on the amount of titanium that can be present in the Ti-Ag-Cu alloy system and achieve ductility. Similar results upon ductility are achieved when the Ag-Cu ratio changes from the 72% Ag—28% Cu eutectic. Additionally similar ductility results are achieved in the Ti-Ag-Al system.

When vanadium or zirconium or mixtures thereof is the reactive metal and material is not as ductile as when titanium is the reactive metal. The presence of brittle dispersed phases relates to the level of the reactive metal and is independent of the particular reactive metal used. When the reactive metal content is above about 2% by weight when vanadium, zirconium or mixtures thereof are used, rapid solidification manufacture techniques or intermediate annealing is required to produce a ductile foil. Titanium is the preferred reactive metal.

In many brazing applications it is desired to utilize relatively low brazing temperatures, that is the liquidus of the alloy should be in the 600°C to 950°C range thus the lower brazing temperatures can be utilized. In addition to the titanium-silver-copper or aluminium or mixtures of Cu and Al, palladium is included into the inventive brazing alloy.

While the liquidus temperature is in the ranges specified, the flow temperature, that is the temperature at which the alloys of this invention flow and wet the materials to be brazed is important in utilizing the materials using conventional brazing techniques. If the materials to be brazed can withstand about 900°C, it is preferred to utilize brazing temperatures in excess of 900°C even if the particular brazing alloy has a lower liquidus temperature. The flow temperatures for the products of this invention generally range from about 900°C to about 1050°C.

The amount of reactive metal in the alloys is from about 0.25% by weight to about 4% by weight with from about 1.0% by weight to about 2% by weight being preferred. That amount of silver is from about 20% by weight to about 85% by weight. It is preferred that the silver content be between about 60% by weight and about 75% by weight.

Copper and/or aluminum are present in the alloy, the weight percent of these elements can vary from about 1% by weight to about 70% by weight, however, the relative amounts of silver and copper, aluminum or mixture thereof, along with the amount of palladium are adjusted to achieve a liquidus temperature within the range of from about 600°C to about 950°C. In the Ti-Ag-Cu system without other metals present it is preferred that the eutectic having a weight ratio of Ag:Cu of about 72:28 be employed. The preferred copper weight range therefore varies from about 20% by weight to about 40% by weight. The preferred aluminum content is from about 4% by weight to about 10% weight.

The palladium contents can vary from about 1% by weight to about 30% by weight of the alloy. The preferred amount of palladium is from about 5% by weight to about 25% by weight.

To more fully illustrate the subject invention the following detailed example is presented. All parts, percentages and proportions are by weight unless otherwise indicated.

Example

An alloy containing about 2% titanium, about 67% silver, about 26% copper and about 5% palladium is prepared and rolled to a foil having a thickness of about 4 mils (0,1016 mm).

The foil is cut into a 1/4 inch (6,35 mm) wide ribbon and a piece of this ribbon is placed between a piece of metallic alloy containing about 53.8% iron, 29% nickel, 17% cobalt and 0.2% manganese known as Kovar® and a piece of 97% alumina. The dimension of the Kovar® are about 1/2″ (12,7 mm) wide by about 3/4″ (19,1 mm) by .010″ (0,254 mm) thick. The dimensions of the alumina are about 1/2″ (12,7 mm) wide by about 3/4″ (19,1 mm) long by about .030″ (0,762 mm) thick. The Kovar®, brazing foil and alumina assembly is heated to about 1020°C under about $10^{-5}$ mm Hg $(1.3 \cdot 10^{-5}$ mbar) pressure for about 10 minutes. The brazed joint is sound.

**Claims**

1. A brazing alloy consisting apart from impurities of from 0.25% to 4% by weight of a reactive metal selected from the group consisting of titanium, vanadium, zirconium and mixtures thereof, from 20% by weight to 85% by weight of silver, from 1% to 70% of a first metal selected from the group consisting of copper, aluminium and mixtures and from 3% to 30% by weight of palladium as a second metal, wherein said alloy has a liquidus temperature of from about 600°C to about 950°C.

2. An alloy according to claim 1 wherein said reactive metal is titanium.

3. An alloy according to claim 1 wherein said first metal is copper.

4. An alloy according to claim 1 wherein said first metal is copper and palladium is present in amounts of from 5% to 25% by weight.

5. An alloy according to claim 1 wherein said first metal is aluminium.

6. An alloy according to claim 6 wherein said aluminium is present in amounts of from 4% by weight to 10% by weight.

7. An alloy according to claim 1 wherein said copper is present in amounts of from 20% by weight to 40% by weight.

**Patentansprüche**

1. Hartlötlegierung, abgesehen von Verunreinigungen bestehend aus 25 Gew.-% bis 4 Gew.-% eines reaktiven Metalls, das aus der aus Titan, Vanadium, Zirkonium und deren Mischungen bestehenden Gruppe ausgewählt wird, aus 20 Gew.-% bis 85 Gew.-% Silber, aus 1% bis 70% eines ersten Metalls, das aus der aus Kupfer, Aluminium und Mischungen bestehenden Gruppe ausgewählt ist, und aus 3 Gew.-% bis 30 Gew.-% Palladium als einem zweiten Metall, wobei die Legierung eine Liquidustemperatur von etwa 600°C bis etwa 950°C aufweist.

2. Legierung nach Anspruch 1, wobei das reaktive Metall Titan ist.

3. Legierung nach Anspruch 1, wobei das erste Metall Kupfer ist.

4. Legierung nach Anspruch 1, wobei das erste Metall Kupfer ist und Palladium in Anteilen von 5 Gew.-% bis 25 Gew.-% vorliegt.

5. Legierung nach Anspruch 1, wobei das erste Metall Aluminium ist.

6. Legierung nach Anspruch 6, wobei das Aluminium in Anteilen von 4 Gew.-% bis 10 Gew.-% vorliegt.

7. Legierung nach Anspruch 1, wobei das Kupfer in Anteilen von 20 Gew.-% bis 40 Gew.-% vorliegt.

**Revendications**

1. Alliage de brasage comprenant, à part des impuretés comprises entre 0,25% et 4% en poids d'un métal réactif choisi dans le groupe comprenant le titane, le vanadium, le zirconium et les mélanges de ceux-ci, entre 20 et 85% en poids d'argent, entre 1 et 70% d'un premier métal choisi dans le groupe comprenant le cuivre, l'aluminium et des mélanges, et entre 3 et 30% en poids de palladium en tant que deuxième métal, dans lequel la température de fusion du dit alliage est comprise entre 600 et 950°C environ.

2. Alliage selon la revendication 1 caractérisé en ce que le dit métal réactif est le titane.

3. Alliage selon la revendication 1 caractérisé en ce que le dit premier métal est le cuivre.

4. Alliage selon la revendication 1 caractérisé en ce que le dit premier métal est le cuivre et que la quantité de palladium présent est comprise entre 5 et 25% en poids.

5. Alliage selon la revendication 1 caractérisé en ce que le dit premier métal est l'aluminium.

6. Alliage selon la revendication 6 caractérisé en ce que la quantité d'aluminium est comprise entre 4 et 10% en poids.

7. Alliage selon la revendication 1 caractérisé en ce que la quantité du dit cuivre est comprise entre 20 et 40% en poids.